(19) Europäisches Patentamt / European Patent Office / Office européen des brevets

(11) **EP 3 654 195 A1**

(12) **EUROPEAN PATENT APPLICATION**
published in accordance with Art. 153(4) EPC

(43) Date of publication:
**20.05.2020 Bulletin 2020/21**

(21) Application number: **19797156.7**

(22) Date of filing: **02.08.2019**

(51) Int Cl.:
**G06F 16/22** (2019.01)    **G06F 16/2455** (2019.01)

(86) International application number:
**PCT/CN2019/099125**

(87) International publication number:
**WO 2020/057272 (26.03.2020 Gazette 2020/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2018 CN 201811091065**

(71) Applicant: **XIAMEN MEIYA PICO INFORMATION CO., LTD**
**Xiamen, Fujian 361000 (CN)**

(72) Inventors:
- ZHU, Zhijia
  Xiamen, Fujian 361000 (CN)
- ZHANG, Yongguang
  Xiamen, Fujian 361000 (CN)
- WANG, Haibin
  Xiamen, Fujian 361000 (CN)
- ZHOU, Chengzu
  Xiamen, Fujian 361000 (CN)
- DU, Xinsheng
  Xiamen, Fujian 361000 (CN)

(74) Representative: **Petraz, Gilberto Luigi et al**
**GLP S.r.l.**
**Viale Europa Unita, 171**
**33100 Udine (IT)**

(54) **INDEX DATA STORAGE AND RETRIEVAL METHODS AND APPARATUSES, AND STORAGE MEDIUM**

(57) The present disclosure provides an index data storage and retrieval method, apparatus, and storage medium. When storing data (i.e., key-value pairs), the data storage method not only sorts according to the size of the value elements, but also divides the sorted data sequence into multiple segments. Each of the segments sorts the key values and stores the data sequence correspondingly to the sorted key value, achieving ordered storage of the value elements and the key values (also referred to as record numbers), that is, a new index structure is constructed. A multi-condition retrieval method suitable for the index structure is proposed in which, for any interval query, the result set can be represented by a union of one or more sets, and the sets are mostly ordered, with at most the two sets at the boundaries being unordered, thus improving the efficiency of AND, OR, and NOT operations in multiple conditional queries.

| |
|---|
| Receiving step, receiving a first retrieval condition and a second retrieval condition that are input — S201 |
| Retrieving step, performing retrieval in the database according to the first retrieval condition and the second retrieval condition to respectively obtain sets S1 and S2 that correspond to the retrieval result and are sorted by the key value — S202 |
| Retrieval result obtaining step, processing the key value sorted sets S1 and S2 to obtain a retrieval result — S203 |

FIG. 2

**Description**

RELATED APPLICATION

The present application claims the priority of Chinese Patent Application No. 201811091065.6 filed on September 18, 2018, the entire disclosure of which is incorporated herein by reference.

TECHNICAL FIELD

The present disclosure relates to the field of data storage and retrieval technologies, and in particular, to an index data storage and retrieval method, apparatus, and storage medium.

BACKGROUND

A database index is a storage structure created to speed up the retrieval of data in a database table. It is a collection of values in one or more columns in the table and a corresponding list of logical pointers to the data locations in the table that physically identify these values. The role of the index is equivalent to the catalog of a book, and the data content that meets the requirements can be found quickly based on the pages in the catalog.

Common storage structures for the index generally include BTree (B/B+ tree), Hash, TrieTree (dictionary tree), bitMap, sequence table, and jump table.

In addition to the query with a single retrieval condition, the database generally supports AND, OR, and NOT logical combination query with multiple retrieval conditions. For example, retrieving, from an e-commerce order form, transaction amount of more than one thousand dollars from yesterday to now is a composite inquiry, in which there are two retrieval conditions: the transaction time being after yesterday, and the transaction amount being more than one thousand. To implement this composite query, there are generally two schemes for index retrieval:

Scheme I:

1. Use a "trade time" field index to query record numbers for which the transaction time is after yesterday, and record them as set S1.
2. Use a "transaction amount" field index to query record numbers for which the transaction amount exceeds one thousand dollars, and record them as set S2.
3. Combine the two sets S1 and S2 to obtain a set of record numbers that meets the two conditions, read the records according to the numbers and put back the result.

Scheme II:

1. Determine which one of the two retrieval conditions possibly leads to a smaller result set, and first use the index to query the record set that meets that condition. For example, if it is estimated that the records for which the trading time is after yesterday are less than the records for which the transaction amount exceeds one thousand, use the "transaction time" field index to query the record numbers for which the trading time is after yesterday, and record them as set S1.
2. Obtain record content for the record numbers in set S1 one by one to read the transaction amount, and judged whether it is more than one thousand yuan. If it is not, delete the record number in set S1. Finally, S1 is the set of record numbers for the composite query.

For a composite query with more than two conditions, the above two schemes may be used at the same time, that is, an index is used to query a set of record numbers that meets one or more retrieval conditions, read the numbers in the set one by one, and check whether it meets other retrieval conditions according to the value of the record field.

The drawbacks of the prior art lie in:

For a composite query with n retrieval conditions, it is assumed that the record number result sets of the individual queries with the n retrieval conditions are S1, S2 ... Sn, respectively, the set sizes are N1, N2 ... Nn, respectively, the final record number result set which meets all the conditions is S, and the size is N. Let S1 be the smallest set, and Sn be the largest set, i.e.,

$$N_1 = min\{N_i | 1 \leq i \leq n\}$$

$$N_n = max\{N_i | 1 \leq i \leq n\}$$

The time complexity of the two schemes is:

Scheme I:

$$T(n) = \sum_{i=1}^{n} N_i$$

Scheme II:

$$T(n) = N_1$$

The time complexity of scheme II is better than that of scheme I, meaning that the retrieval time should be faster, but some database index data is in the memory, and the index query is very fast. But the data needed for verifying whether the retrieval conditions are met one by one is in the disk, which is relatively slow, so scheme II is more efficient when it is generally much smaller than $N_n$, and scheme I is more efficient when the difference between $N_1$ and $N_n$ is small.

Although these two schemes have achieved good results in the majority of queries, but there is a shortcoming. When set S1 is large and the combined final result set S is small, the effect of these two schemes is not very good. That is, the result sets for various retrieval conditions are relatively large, and the total result set of the composite search of these conditions is small. Such queries are often not supported well by the database, and are time consuming.

SUMMARY

In view of the above-described deficiencies in the prior art, the present disclosure proposes the following technical solutions.

An index data storage method comprising:

a dividing step, combining record numbers and values of corresponding fields into respective key value pairs to obtain a total of P key value pairs, sorting all the key value pairs according to sizes of value elements, and dividing all of the key elements of the sorted P key value pairs into K sets, each of which including L key elements;

a sorting step, respectively sorting the divided K key element sets according to the sizes of the key elements to obtain corresponding K key element ordered sequence sets; and

a storing step, respectively storing the P ordered key value pairs and the corresponding K sorted key element sets correspondingly,

wherein L is an integer greater than 0 and K is an integer greater than 0.

Further, a difference between L and K is less than a threshold value, $K = \left[ \sqrt{P} \right]$ and $L = [P/K]$.

Further, when the total number P of all key value pairs is not an integer multiple of K, the number of key value pairs in the last set is P-(K-1)*L, wherein P is an integer greater than 1.

The present disclosure further proposes a data retrieval method comprising:

a receiving step, receiving a first retrieval condition and a second retrieval condition that are input;

a retrieving step, performing retrieval in the database according to the first retrieval condition and the second retrieval condition to respectively obtain sets S1 and S2 that correspond to the retrieval result and are sorted by the key value; and

a retrieval result obtaining step, processing the key value sorted sets S1 and S2 to obtain a retrieval result.

Further, the data in the database is stored using any one of the data retrieval methods described above.

Further, when the processing of the key value sorted sets S1 and S2 is an AND operation, the operation is: taking the smallest element m1 from S1; finding in S2 the first element m2 that is greater than or equal to m1; if m2 and m1 are equal, adding m2 into set S, and continuing looking in S2 for an element to replace m2; finding in S1 the first element m1 that is greater than or equal to m2; if m1 and m2 are equal, adding m1 into set S, and continuing looking in S1 for an element to replace m1; and repeating taking m2 from S2 and m1 from S1 until the element m1 or m2 cannot be found, wherein the set S is an intersection of the ordered set S1 and S2, and the corresponding retrieval result is obtained according to the key value in S.

Further, when the processing of the key value sorted sets S1 and S2 is a NOT operation, the operation is: taking the smallest element m1 from S1; finding in S2 the first element m2 that is greater than or equal to m1; if m2 and m1 are not equal, adding m1 into set S, and if m2 and m1 are equal, continuing looking in S2 for an element to replace m2; finding in S1 all elements that are larger than m1 and smaller than m2 and adding them into the result set S, and replacing m1 with the first element in S1 that is larger than m2; and repeating taking m2 from S2 and m1 from S1 until the element m1 or m2 cannot be found, wherein the set S is a result of performing a NOT operation on S2 by the ordered set S1, and the corresponding retrieval result is obtained according to the key value in S.

Further, when the processing of the key value sorted sets S1 and S2 is an OR operation, the operation is: performing the OR operation by creating a maximal heap.

Further, the specific operation of the retrieving step is: querying a key value range of S1 according to a first retrieval condition, and splitting the key value range according to the sorted set in storage of the data, to obtain a plurality of ordered sets and X unordered sets; sorting the X unordered sets in S1; creating a maximal heap for all subsets of S1, with the size of the smallest element in each of the subsets representing the size relationship between the subsets, the smallest set being at the top of the heap, and the smallest element taken from S1 is the first element of the top set of the heap; searching the first element that is greater than or equal to m1, and determining whether the first element of the top set is less than m1, if less than m1, eliminating, from the top set of the heap, elements smaller than m1 by ordered set binary search such that the first element of the top set of the heap is greater than or equal to m1, then re-adjusting the heap, and then repeating the determination of the top set of the heap until the first element of the top set of the heap is greater than or equal to m1, then the first element of the top set of the heap is the first element of all the sets of the entire heap that is greater than or equal to m1; and obtaining S2 in the same manner, wherein X is 0, 1, or 2.

The present disclosure further proposes an index data storage apparatus comprising:

a dividing module configured to combine record numbers and values of corresponding fields into respective key value pairs to obtain a total of P key value pairs, sort all the key value pairs according to sizes of value elements, and divide all of the key elements of the sorted P key value pairs into K sets, each of which includes L key elements;

a sorting module configured to respectively sort the divided K key element sets according to the sizes of the key elements to obtain corresponding K key element ordered sequence sets; and

a storing module configured to respectively store the P ordered key value pairs and the corresponding K sorted key element sets correspondingly.

Further, a difference between L and K is less than a threshold value, $K = \left\lceil \sqrt{P} \right\rceil$ and $L = [P/K]$.

Further, when the total number P of all key value pairs is not an integer multiple of K, the number of key value pairs in the last set is P-(K-1)*L, wherein P is an integer greater than 1.

The present disclosure further proposes a data retrieval apparatus comprising:

a receiving module configured to receive a first retrieval condition and a second retrieval condition that are input;

a retrieving module configured to perform retrieval in the database according to the first retrieval condition and the second retrieval condition to respectively obtain sets S1 and S2 that correspond to the retrieval result and are sorted by the key value; and

a retrieval result obtaining module configured to process the key value sorted sets S1 and S2 to obtain a retrieval result.

Further, the data in the database is stored using any one of the data retrieval methods described above.

Further, when the processing of the key value sorted sets S1 and S2 is an AND operation, the operation is: taking the smallest element m1 from S1; finding in S2 the first element m2 that is greater than or equal to m1; if m2 and m1 are equal, adding m2 into set S, and continuing looking in S2 for an element to replace m2; finding in S1 the first element m1 that is greater than or equal to m2; if m1 and m2 are equal, adding m1 into set S, and continuing looking in S1 for an element to replace m1; and repeating taking m2 from S2 and m1 from S1 until the element m1 or m2 cannot be found, wherein the set S is an intersection of the ordered set S1 and S2, and the corresponding retrieval result is obtained according to the key value in S.

Further, when the processing of the key value sorted sets S1 and S2 is a NOT operation, the operation is: taking the smallest element m1 from S1; finding in S2 the first element m2 that is greater than or equal to m1; if m2 and m1 are not equal, adding m1 into set S, and if m2 and m1 are equal, continuing looking in S2 for an element to replace m2; finding in S1 all elements that are larger than m1 and smaller than m2 and adding them into the result set S, and replacing m1 with the first element in S1 that is larger than m2; and repeating taking m2 from S2 and m1 from S1 until the element m1 or m2 cannot be found, wherein the set S is a result of performing a NOT operation on S2 by the ordered set S1, and the corresponding retrieval result is obtained according to the key value in S.

Further, when the processing of the key value sorted sets S1 and S2 is an OR operation, the operation is: performing the OR operation by creating a maximal heap.

Further, the specific operation of the retrieving step is: querying a key value range of S1 according to a first retrieval condition, and splitting the key value range according to the sorted set in storage of the data, to obtain a plurality of ordered sets and X unordered sets; sorting the X unordered sets in S1; creating a maximal heap for all subsets of S1, with the size of the smallest element in each of the subsets representing the size relationship between the subsets, the smallest set being at the top of the heap, and the smallest element taken from S1 is the first element of the top set of the heap; searching the first element that is greater than or equal to m1, and determining whether the first element of the top set is less than m1, if less than m1, eliminating, from the top set of the heap, elements smaller than m1 by ordered set binary search such that the first element of the top set of the heap is greater than or equal to m1, then re-adjusting the heap, and then repeating the determination of the top set of the heap until the first element of the top set of the heap is greater than or equal to m1, then the first element of the top set of the heap is the first element of all the sets of the entire heap that is greater than or equal to m1; and obtaining S2 in the same manner, wherein X is 0, 1, or 2.

The present disclosure further proposes a computer readable storage medium, characterized in that the storage medium has stored thereon computer program code that, when executed by a computer, performs any one of the methods described above.

The technical effect of the present disclosure is as follows. In order to improve the retrieval efficiency under a plurality of retrieval conditions, in storing data (i.e., key-value pairs), the present disclosure not only sorts the data according to the size of the value elements but also divides the sorted data sequence into multiples segments. In each segment the key values are sorted and the data sequence is stored corresponding to the key value sorting, such that the value elements and key values (also called record numbers) are stored in order. That is, a new index structure is constructed such that, for any interval queries, the result set can be represented by a union of one or more sets, and most of these sets are ordered except that the two sets at the boundary are unordered at most, thereby improving the efficiency of the AND, OR and NOT operation in multiple-condition queries.

BRIEF DESCRIPTION OF THE DRAWINGS

Other features, objects, and advantages of the present disclosure will become apparent from the detailed description of the non-limiting embodiments with reference to the following drawings.

FIG. 1 is a flow chart of an index data storage method in accordance with an embodiment of the present disclosure.
FIG. 2 is a flow chart of a data retrieval method in accordance with an embodiment of the present disclosure.
FIG. 3 is a structural diagram of an index data storage apparatus in accordance with an embodiment of the present disclosure.
FIG. 4 is a structural diagram of a data retrieval apparatus in accordance with an embodiment of the present disclosure.

DETAILED DESCRIPTION

The present disclosure will be further described in detail below in conjunction with the accompanying drawings and embodiments. It is understood that the specific embodiments described herein are merely illustrative of the disclosure, rather than limiting of the disclosure. It is also to be noted that, for the convenience of description, only the parts related to the related disclosure are shown in the drawings.

It should be noted that the embodiments in the present disclosure and the features in the embodiments may be combined with each other without conflict. The present disclosure will be described in detail below with reference to the drawings and embodiments.

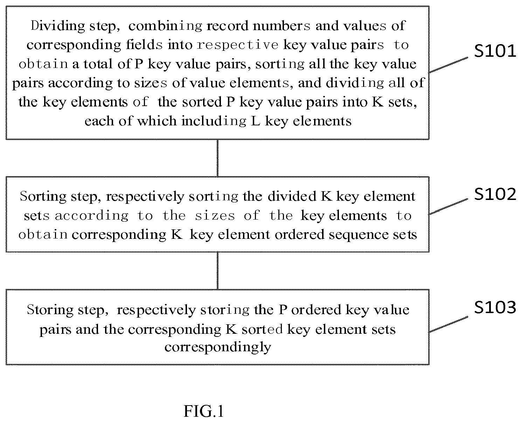

FIG. 1 illustrates an index data storage method of the present disclosure, which comprises:

Dividing step S101, record numbers and values of corresponding fields are combined into respective key value pairs, obtaining a total of P key value pairs, and all the key value pairs are sorted according to sizes of value elements, and all of the key elements of the sorted P key value pairs are divided into K sets, each of which includes L key elements (also referred to as key values, in the present disclosure, the key values are the same as the key elements). Sorting step S102, the divided K key element sets are respectively sorted according to the sizes of the key elements, obtaining corresponding K key element ordered sequence sets.

Storing step S103, the P ordered key value pairs and the corresponding K sorted key element sets are respectively stored correspondingly.

The parameters P, L and K in the present disclosure are obviously integers greater than 0, as will be apparent to those skilled in the art.

It has been experimentally proved that the closer the values of L and K are, the better the effect is when performing the search, that is, the difference between L and K is less than a threshold, such as a threshold of 3, 5, etc. A preferred embodiment is $K = \left\lceil \sqrt{P} \right\rceil$ and $L = [P/K]$, in which case the retrieval efficiency is the highest. This is one of the important disclosures of the present disclosure.

In some embodiments, the total number of key value pairs cannot be exactly divided into multiple sets, that is, when the total number P of all key value pairs is not an integer multiple of K, the number of key value pairs in the last set is P-(K-1)*L, where P is an integer greater than 1.

A specific embodiment of the method is as follows. In order to realize the order of values and record numbers, here is a method of trading space for time, which is in the form of a multi-level sequence table. I.e., in addition to the record number corresponding to the field order value, the storage is added of the sorting of the record numbers, which may be batch and multi-segment storage according to the level configured. As shown in the following table, a sequence of a column is added in which every five consecutive record numbers are sorted.

| Transaction amount (value element) | 300 | 300 | 400 | 400 | 500 | 700 | 800 | 800 | 1011 | 1100 | 1100 | 1100 | 1200 | 1200 | 1200 |
|---|---|---|---|---|---|---|---|---|---|---|---|---|---|---|---|
| Record number (key value, also referred to as key element) | 10 | 11 | 7 | 8 | 5 | 4 | 3 | 6 | 14 | 2 | 9 | 12 | 1 | 13 | 15 |
| L=5 | 5 | 7 | 8 | 10 | 11 | 2 | 3 | 4 | 6 | 14 | 1 | 9 | 12 | 13 | 15 |

L=5 means that every 5 consecutive record sets are sorted, that is, three ordered sets of size 5 form all the numbers, and the three ordered sets are {5, 7, 8, 10, 11}, {2, 3, 4, 6, 14} and {1, 9, 12, 13, 15}. I.e., P=15, K=3, L=5 in this embodiment. This data storage manner, i.e., the way the index structure is established, is one of the important disclosures of the present disclosure, and is the basis of the retrieval method proposed in the following by the present disclosure.

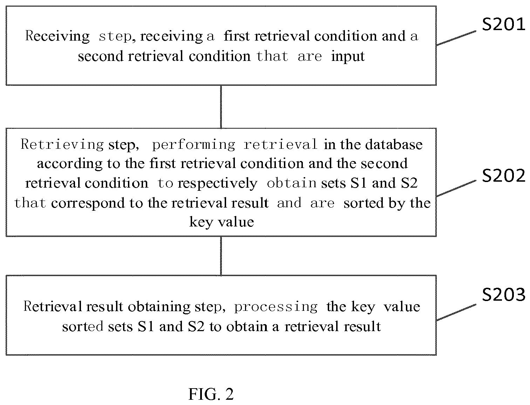

FIG. 2 illustrates a data retrieval method, which includes:

Receiving step S201, a first retrieval condition and a second retrieval condition that are input are received. For example, the first retrieval condition i is for the record for which the transaction time is after yesterday, and the second retrieval condition is for the record for which the transaction amount exceeds one thousand yuan.

Retrieving step S202, retrieval is performed in the database according to the first retrieval condition and the second retrieval condition to respectively obtain sets S1 and S2 that correspond to the retrieval result and are sorted by the key value. In an embodiment, S1 is a record number set for which the transaction time is after yesterday, and S2 is a record number set for which the transaction amount exceeds one thousand yuan, with S1 and S2 being ordered sets.

Retrieval result obtaining step S203, the key value sorted sets S1 and S2 are processed to obtain a retrieval result.

The data in the database in the present disclosure is stored using the method shown in FIG. 1.

The AND operation is a commonly used operation when multi-condition retrieval is performed. When the processing of the key value sorted sets S1 and S2 is an AND operation, the operation is:

1. Take the smallest element m1 from S1. The time complexity is 1.

2. Find in S2 the first element m2 that is greater than or equal to m1; if m2 and m1 are equal, add m2 into set S, and continue looking in S2 for an element to replace m2. An ordered set can be searched by binary search. The complexity is $log_2(N_{t2})$, where $N_{t2}$ is the size of set S2 before this step.

3. Find in S1 the first element m1 that is greater than or equal to m2; if m1 and m2 are equal, add m1 into set S, and continue looking in S1 for an element to replace m1. The complexity is $log_2(N_{t1})$, where $N_{t1}$ is the size of set S1 before this step.

4. Repeat steps 2 to 3 until the element m1 or m2 cannot be found.

The time complexity of this algorithm is:

$$T(n) = N * log_2(N_1 * N_2)/(2a)$$

N is the size of set S, N1 is the size of set S1, N2 is the size of set S2, and a is a coefficient parameter of the intersection of the two sets S1 and S2. The storage structures of S1 and S2 are ordered, and the result set S can be quickly calculated without traversing S1 and S2. Therefore, the algorithm may obtain a very good effect in the case where N1 and N2 are relatively large whilst N is small. The set S is the intersection of the ordered sets S1 and S2 of the key values, and the corresponding retrieval result is obtained according to the key values in S.

The NOT operation is substantially similar to the AND operation. For example, steps for $S_{12} = S_1 \cap (\neg S_2)$ are as follows:

1. Take the smallest element m1 from S1.
2. Find in S2 the first element m2 that is greater than or equal to m1; if m2 and m1 are not equal, add m1 into the result set $S_{12}$. If m2 and m1 are equal, continue looking in S2 for an element to replace m2.
3. Find in S1 all elements that are larger than m1 and smaller than m2 and add them into the result set $S_{12}$, and replace m1 with the first element in S1 that is larger than m2.
4. Repeat steps 2 to 3 until the element m1 or m2 cannot be found. The union of the two retrieval conditions is the same as the union of multiple ordered subsets. A maximal heap is created, and the result of the union of the two sets is used as a retrieval condition. One difference from the ordered subsets is that the record numbers between the ordered subsets are not repeated, and several sets of the retrieval conditions may have the same number, so removal of duplication is required in the process of taking the minimum value.

That is, $S_{34} = S_3 \cup S_4$, and $S_{34}$ is treated as a retrieval condition.

A specific implementation is a combination of four retrieval conditions as follows:

$$S = S_1 \cap (\neg S_2) \cap (S_3 \cup S_4)$$

where ¬ is NOT, ∩ is AND (intersection), and U is OR (union).

According to the above description of the NOT and OR operations, the four-condition retrieval is converted into an AND operation of $S_{12}$ and $S_{34}$, that is, the multi-condition operation is split and combined and then operated. The above specific multi-condition retrieval method is one of the important disclosures of the present disclosure, which can greatly improve the retrieval efficiency in combination with the data storage manner of the present disclosure.

The specific operation of the retrieving step S102 is: querying the key value range of S1 according to the first retrieval condition, and splitting the key value range according to the sorted set in storage of the data, to obtain a plurality of ordered sets and X unordered sets; sorting the X unordered sets in S1; creating a maximal heap for all subsets of S1, with the size of the smallest element in each of the subsets representing the size relationship between the subsets, the smallest set being at the top of the heap, and the smallest element taken from S1 is the first element of the top set of the heap; searching the first element that is greater than or equal to m1, and determining whether the first element of the top set is less than m1, if less than m1, eliminate, from the top set of the heap, elements smaller than m1 by ordered set binary search such that the first element of the top set of the heap is greater than or equal to m1, then re-adjust the heap, and then repeat the determination of the top set of the heap until the first element of the top set of the heap is greater than or equal to m1, then the first element of the top set of the heap is the first element of all the sets of the entire heap that is greater than or equal to m1; and obtaining S2 in the same manner, where X is 0, 1, or 2. That is, only the sets at left and right boundaries may be unordered.

Based on the above table, a specific implementation is as follows: a record {14, 2, 9, 12, 1, 13, 15} for which the transaction amount is more than 1000 is a union of an unordered set {14, 2} (the left boundary is an unordered set) and an ordered set {1, 9, 12, 13, 15}.

Now S1 is a union of an ordered set and an unordered set. What we need to do is to treat multiple sets as a whole with an algorithm to quickly find the location of an element having a specified size in the set. The ordered set can be searched by binary search. Multiple ordered sets, in fact, can be organized together using a heap, so as to find the location of the element having the specified size more efficiently.

This way, the time complexity becomes

$$T(n) = 4t\,log_2(t) + N * N_1 * N_2 * log_2(N_1 * N_2)/(2t^2 a b_1 b_2)$$

t is the size of the ordered set, b1 is the intersection coefficient between the subsets of S1, b2 is the intersection coefficient between the subsets of S2, and $4t\,log_2(t)$ is the complexity of sorting the unordered sets. It can be seen that the increase of t will increase the complexity of sorting, but the number of the ordered subsets can be reduced, and the complexity of merging the latter portion can be reduced. Thus, further optimization can be performed to establish a multi-level sorting sequence, so that the number of unordered sets can use a smaller t, the ordered subset can use a combination of various sizes t to reduce the number of the subsets and improve efficiency. However, each time one level of sorting is added, the space taken up by the record numbers increases, so there are trade-offs in creating how many ordered sets. In the case where N is relatively small, most of $t^2 b_1 b_2$ will be very close to $N_1 * N_2$, and the overall time complexity will achieve good results. This is one of the important disclosures of the present disclosure.

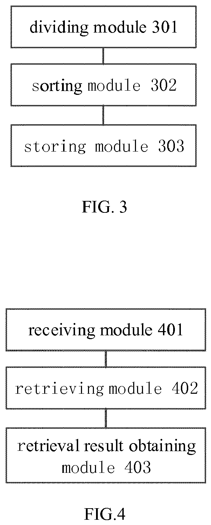

With further reference to FIG. 3, as an implementation of the method shown in FIG. 1, the present disclosure provides an embodiment of an index data storage apparatus. The apparatus embodiment corresponds to the method embodiment shown in FIG. 1. The apparatus may specifically be included in a variety of electronic devices.

FIG. 3 shows an index data storage apparatus, the device comprising:

A dividing module 301 which combines record numbers and values of corresponding fields into respective key value pairs to obtain a total of P key value pairs, sorts all the key value pairs according to sizes of value elements, and divides all of the key elements of the sorted P key value pairs into K sets, each of which includes L key elements (also referred to as key values, in the present disclosure, the key values are the same as the key elements).

A sorting module 302 which respectively sorts the divided K key element sets according to the sizes of the key elements, obtaining corresponding K key element ordered sequence sets.

A storing module 303 which respectively stores the P ordered key value pairs and the corresponding K sorted key element sets correspondingly.

The parameters P, L and K in the present disclosure are obviously integers greater than 0, as will be apparent to those skilled in the art.

It has been experimentally proved that the closer the values of L and K are, the better the effect is when performing the search, that is, the difference between L and K is less than a threshold, such as a threshold of 3, 5, etc.

A preferred embodiment is $K = \left[\sqrt{P}\right]$ and $L = [P/K]$, in which case the retrieval efficiency is the highest. This is one of the important disclosures of the present disclosure.

In some embodiments, the total number of key value pairs cannot be exactly divided into multiple sets, that is, when the total number P of all key value pairs is not an integer multiple of K, the number of key value pairs in the last set is P-(K-1)*L, where P is an integer greater than 1.

A specific embodiment of the method is as follows. In order to realize the order of values and record numbers, here is a method of trading space for time, which is in the form of a multi-level sequence table. I.e., in addition to the record number corresponding to the field order value, the storage is added of the sorting of the record numbers, which may be batch and multi-segment storage according to the level configured. As shown in the following table, a sequence of a column is added in which every five consecutive record numbers are sorted.

| Transaction amount (valueelement) | 300 | 300 | 400 | 400 | 500 | 700 | 800 | 800 | 1011 | 1100 | 1100 | 1100 | 1200 | 1200 | 1200 |
|---|---|---|---|---|---|---|---|---|---|---|---|---|---|---|---|
| Record number (key value, also referred to askeyelement) | 10 | 11 | 7 | 8 | 5 | 4 | 3 | 6 | 14 | 2 | 9 | 12 | 1 | 13 | 15 |
| L=5 | 5 | 7 | 8 | 10 | 11 | 2 | 3 | 4 | 6 | 14 | 1 | 9 | 12 | 13 | 15 |

L=5 means that every 5 consecutive record sets are sorted, that is, three ordered sets of size 5 form all the numbers, and the three ordered sets are {5, 7, 8, 10, 11}, {2, 3, 4, 6, 14} and {1, 9, 12, 13, 15}. I.e., P=15, K=3, L=5 in this embodiment. This data storage manner, i.e., the way the index structure is established, is one of the important disclosures of the present disclosure, and is the basis of the retrieval method proposed in the following by the present disclosure.

With further reference to FIG. 4, as an implementation of the method shown in FIG. 2, the present disclosure provides an embodiment of a data retrieval apparatus. The apparatus embodiment corresponds to the method embodiment shown in FIG. 2. The apparatus may specifically be included in a variety of electronic devices.

FIG. 4 shows a data retrieval apparatus comprising:

A receiving module 401 which receives a first retrieval condition and a second retrieval condition that are input. For example, the first retrieval condition i is for the record for which the transaction time is after yesterday, and the second retrieval condition is for the record for which the transaction amount exceeds one thousand yuan.

A retrieving module 402 which performs retrieval in the database according to the first retrieval condition and the second retrieval condition to respectively obtain sets S1 and S2 that correspond to the retrieval result and are sorted by the key value. In an embodiment, S1 is a record number set for which the transaction time is after yesterday, and S2 is a record number set for which the transaction amount exceeds one thousand yuan, with S1 and S2 being ordered sets.

A retrieval result obtaining module 403 which processes the key value sorted sets S1 and S2 to obtain a retrieval result.

The data in the database in the present disclosure is stored using the method shown in FIG. 1.

The AND operation is a commonly used operation when multi-condition retrieval is performed. When the processing of the key value sorted sets S1 and S2 is an AND operation, the operation is:

1. Take the smallest element m1 in S1. The time complexity is 1.

2. Find in S2 the first element m2 that is greater than or equal to m1; if m2 and m1 are equal, add m2 into set S, and continue looking in S2 for an element to replace m2. An ordered set can be searched by binary search. The complexity is $log_2(N_{t2})$, where $N_{t2}$ is the size of set S2 before this step.

3. Find in S1 the first element m1 that is greater than or equal to m2; if m1 and m2 are equal, add m1 into set S, and continue looking in S1 for an element to replace m1. The complexity is $log2(N_{t1})$, where $N_{t1}$ is the size of set S1 before this step.

4. Repeat steps 2 to 3 until the element m1 or m2 cannot be found.

The time complexity of this algorithm is:

$$T(n) = N * log_2( N_1 * N_2)/(2a)$$

N is the size of set S, N1 is the size of set S1, N2 is the size of set S2, and a is a coefficient parameter of the intersection of the two sets S1 and S2. The storage structures of S1 and S2 are ordered, and the result set S can be quickly calculated without traversing S1 and S2. Therefore, the algorithm may obtain a very good effect in the case where N1 and N2 are relatively large whilst N is small. The set S is the intersection of the ordered sets S1 and S2 of the key values, and the corresponding retrieval result is obtained according to the key values in S.

The NOT operation is substantially similar to the AND operation. For example, steps for $S_{12} = S_1 \cap (\neg S_2)$ are as follows:

1. Take the smallest element m1 in S1.
2. Find in S2 the first element m2 that is greater than or equal to m1; if m2 and m1 are not equal, add m1 into the result set $S_{12}$. If m2 and m1 are equal, continue looking in S2 for an element to replace m2.
3. Find in S1 all elements that are larger than m1 and smaller than m2 and add them into the result set $S_{12}$, and replace m1 with the first element in S1 that is larger than m2.
4. Repeat steps 2 to 3 until the element m1 or m2 cannot be found. The union of the two retrieval conditions is the same as the union of multiple ordered subsets. A maximal heap is created, and the result of the union of the two sets is used as a retrieval condition. One difference from the ordered subsets is that the record numbers between the ordered subsets are not repeated, and several sets of the retrieval conditions may have the same number, so removal of duplication is required in the process of taking the minimum value.

That is, $S_{34} = S_3 \cup S_4$, and $S_{34}$ is treated as a retrieval condition.

A specific implementation is a combination of four retrieval conditions as follows:

$$S = S_1 \cap (\neg S_2) \cap (S_3 \cup S_4)$$

where ¬ is NOT, ∩ is AND (intersection), and U is OR (union).

According to the above description of the NOT and OR operations, the four-condition retrieval is converted into an AND operation of $S_{12}$ and $S_{34}$, that is, the multi-condition operation is split and combined and then operated. The above specific multi-condition retrieval method is one of the important disclosures of the present disclosure, which can greatly improve the retrieval efficiency in combination with the data storage manner of the present disclosure.

The specific operation of the retrieving module 402 is: querying the key value range of S1 according to the first retrieval condition, and splitting the key value range according to the sorted set in storage of the data, to obtain a plurality of ordered sets and X unordered sets; sorting the X unordered sets in S1; creating a maximal heap for all subsets of S1, with the size of the smallest element in each of the subsets representing the size relationship between the subsets, the smallest set being at the top of the heap, and the smallest element taken from S1 is the first element of the top set of the heap; searching the first element that is greater than or equal to m1, and determining whether the first element of the top set is less than m1, if less than m1, eliminate, from the top set of the heap, elements smaller than m1 by ordered set binary search such that the first element of the top set of the heap is greater than or equal to m1, then re-adjust the heap, and then repeat the determination of the top set of the heap until the first element of the top set of the heap is greater than or equal to m1, then the first element of the top set of the heap is the first element of all the sets of the entire heap that is greater than or equal to m1; and obtaining S2 in the same manner, where X is 0, 1, or 2. That is, only the sets at left and right boundaries may be unordered.

Based on the above table, a specific implementation is as follows: a record {14, 2, 9, 12, 1, 13, 15} for which the transaction amount is more than 1000 is a union of an unordered set {14, 2} (the left boundary is an unordered set) and an ordered set {1,9,12,13,15}.

Now S1 is a union of an ordered set and an unordered set. What we need to do is to treat multiple sets as a whole with an algorithm to quickly find the location of an element having a specified size in the set. The ordered set can be searched by binary search. Multiple ordered sets, in fact, can be organized together using a heap, so as to find the location of the element having the specified size more efficiently.

This way, the time complexity becomes

$$T(n) = 4t\, log_2(t) + N * N_1 * N_2 * log_2(N_1 * N_2)/(2t^2 a b_1 b_2)$$

t is the size of the ordered set, b1 is the intersection coefficient between the subsets of S1, b2 is the intersection coefficient between the subsets of S2, and $4t\, log_2(t)$ is the complexity of sorting the unordered sets. It can be seen that the increase of t will increase the complexity of sorting, but the number of the ordered subsets can be reduced, and the complexity of merging the latter portion can be reduced. Thus, further optimization can be performed to establish a multi-level sorting sequence, so that the number of unordered sets can use a smaller t, the ordered subset can use a combination of various sizes t to reduce the number of the subsets and improve efficiency. However, each time one level of sorting is added, the space taken up by the record numbers increases, so there are trade-offs in creating how many ordered sets. In the case where N is relatively small, most of $t^2 b_1 b_2$ will be very close to $N_1 * N_2$, and the overall time complexity will achieve good results. This is one of the important disclosures of the present disclosure.

For the convenience of description, the above apparatuses are described as being divided into various units in terms of functions. Of course, the functions of the various units may be implemented in one or more software and/or hardware in implementing the present disclosure.

It will be apparent to those skilled in the art from the above description of the embodiments that the present disclosure can be implemented by means of software plus a necessary general hardware platform. Based on such understanding, the technical solutions of the present disclosure, or their portions that make contributions to the prior art, may essentially be embodied in the form of a software product that can be stored in a storage medium such as a ROM/RAM, a disk, or an optical disk or the like, including a number of instructions for causing a computer device (which may be a personal computer, server, or network device, etc.) to perform the methods described in various embodiments of the present disclosure or portions of the embodiments.

It should be noted that the above embodiments are merely illustrative and not limiting of the technical solutions of the present disclosure. Although the present disclosure has been described in detail with reference to the above embodiments, those skilled in the art will understand that modifications or equivalent substitutions may be made to the present disclosure without departing from the spirit and scope of the disclosure. Such modifications or equivalent substitutions are intended to be still encompassed within the scope of the claims of the present disclosure.

**Claims**

1.  An index data storage method, **characterized in that** the method comprises:

    a dividing step, combining record numbers and values of corresponding fields into respective key value pairs to obtain a total of P key value pairs, sorting all the key value pairs according to sizes of value elements, and dividing all of the key elements of the sorted P key value pairs into K sets, each of which including L key elements;
    a sorting step, respectively sorting the divided K key element sets according to the sizes of the key elements to obtain corresponding K key element ordered sequence sets; and
    a storing step, respectively storing the P ordered key value pairs and the corresponding K sorted key element sets correspondingly,
    wherein L is an integer greater than 0 and K is an integer greater than 0.

2.  The method according to claim 1, **characterized in that** a difference between L and K is less than a threshold value, $K = \left\lceil \sqrt{P} \right\rceil$ and $L = [P/K]$.

3.  The method according to claim 1, **characterized in that** when the total number P of all key value pairs is not an integer multiple of K, the number of key value pairs in the last set is P-(K-1)*L, wherein P is an integer greater than 1.

4.  A data retrieval method, **characterized in that** the method comprises:

    a receiving step, receiving a first retrieval condition and a second retrieval condition that are input;
    a retrieving step, performing retrieval in a database according to the first retrieval condition and the second retrieval condition to respectively obtain sets S1 and S2 that correspond to the retrieval result and are sorted by the key value; and
    a retrieval result obtaining step, processing the key value sorted sets S1 and S2 to obtain a retrieval result.

5.  The method according to claim 4, **characterized in that** the data in the database is stored using the method according to any one of claims 1 to 3.

6.  The method according to claim 5, **characterized in that** when the processing of the key value sorted sets S1 and S2 is an AND operation, the operation is: taking the smallest element m1 from S1; finding in S2 the first element m2 that is greater than or equal to m1; if m2 and m1 are equal, adding m2 into set S, and continuing looking in S2 for an element to replace m2; finding in S1 the first element m1 that is greater than or equal to m2; if m1 and m2 are equal, adding m1 into set S, and continuing looking in S1 for an element to replace m1; and repeating taking m2 from S2 and m1 from S1 until the element m1 or m2 cannot be found, wherein the set S is an intersection of the ordered set S1 and S2, and the corresponding retrieval result is obtained according to the key value in S.

7.  The method according to claim 5, **characterized in that** when the processing of the key value sorted sets S1 and S2 is a NOT operation, the operation is: taking the smallest element m1 from S1; finding in S2 the first element m2 that is greater than or equal to m1; if m2 and m1 are not equal, adding m1 into set S, and if m2 and m1 are equal, continuing looking in S2 for an element to replace m2; finding in S1 all elements that are larger than m1 and smaller than m2 and adding them into the result set S, and replacing m1 with the first element in S1 that is larger than m2; and repeating taking m2 from S2 and m1 from S1 until the element m1 or m2 cannot be found, wherein the set S is a result of performing a NOT operation on S2 by the ordered set S1, and the corresponding retrieval result is obtained according to the key value in S.

8.  The method according to claim 5, **characterized in that** when the processing of the key value sorted sets S1 and S2 is an OR operation, the operation is: performing the OR operation by creating a maximal heap.

9.  The method according to any one of claims 6 to 8, **characterized in that** the specific operation of the retrieving step is: querying a key value range of S1 according to a first retrieval condition, and splitting the key value range according to the sorted set in storage of the data, to obtain a plurality of ordered sets and X unordered sets; sorting the X unordered sets in S1; creating a maximal heap for all subsets of S1, with the size of the smallest element in each of the subsets representing the size relationship between the subsets, the smallest set being at the top of the heap, and the smallest element taken from S1 is the first element of the top set of the heap; searching the first element that is greater than or equal to m1, and determining whether the first element of the top set is less than m1, if less than m1, eliminating, from the top set of the heap, elements smaller than m1 by ordered set binary search such that the first element of the top set of the heap is greater than or equal to m1, then re-adjusting the heap, and then repeating the determination of the top set of the heap until the first element of the top set of the heap is greater than or equal to m1, then the first element of the top set of the heap is the first element of all the sets of the entire heap that is greater than or equal to m1; and obtaining S2 in the same manner, wherein X is 0, 1, or 2.

10. A computer readable storage medium, **characterized in that** the storage medium has stored thereon computer program code that, when executed by a computer, performs the method of any one of claims 1 to 9.

Dividing step, combining record numbers and values of corresponding fields into respective key value pairs to obtain a total of P key value pairs, sorting all the key value pairs according to sizes of value elements, and dividing all of the key elements of the sorted P key value pairs into K sets, each of which including L key elements — S101

Sorting step, respectively sorting the divided K key element sets according to the sizes of the key elements to obtain corresponding K key element ordered sequence sets — S102

Storing step, respectively storing the P ordered key value pairs and the corresponding K sorted key element sets correspondingly — S103

FIG.1

```
┌──────────────────────────────────────────────┐
│ Receiving step, receiving a first retrieval  │ ⟋ S201
│ condition and a second retrieval condition   │
│ that are input                               │
└──────────────────────────────────────────────┘
                        │
┌──────────────────────────────────────────────┐
│ Retrieving step, performing retrieval in the │
│ database according to the first retrieval    │ ⟋ S202
│ condition and the second retrieval condition │
│ to respectively obtain sets S1 and S2        │
│ that correspond to the retrieval result and  │
│ are sorted by the key value                  │
└──────────────────────────────────────────────┘
                        │
┌──────────────────────────────────────────────┐
│ Retrieval result obtaining step, processing  │ ⟋ S203
│ the key value sorted sets S1 and S2 to       │
│ obtain a retrieval result                    │
└──────────────────────────────────────────────┘
```

FIG. 2

dividing module 301

sorting module 302

storing module 303

FIG. 3

receiving module 401

retrieving module 402

retrieval result obtaining module 403

FIG.4

## INTERNATIONAL SEARCH REPORT

| International application No. |
|---|
| **PCT/CN2019/099125** |

**A. CLASSIFICATION OF SUBJECT MATTER**

G06F 16/22(2019.01)i; G06F 16/2455(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: 索引, 数据, 存储, 检索, 结构, 集合, 条件, 逻辑, 排序, 键值, 元素, 处理; index, data, memory, search, structure, set, condition, logic, sort, key, element, process

**C. DOCUMENTS CONSIDERED TO BE RELEVANT**

| Category* | Citation of document, with indication, where appropriate, of the relevant passages | Relevant to claim No. |
|---|---|---|
| PX | CN 109325032 A (XIAMEN MEIYA PICO INFORMATION CO., LTD.) 12 February 2019 (2019-02-12) claims 1-10 | 1-10 |
| X | CN 105930453 A (LE HOLDINGS (BEIJING) CO., LTD. ET AL.) 07 September 2016 (2016-09-07) description, paragraphs 0025-0053 | 4, 10 |
| A | CN 101770291 A (GUANGDONG GUOBI TECHNOLOGY CO., LTD.) 07 July 2010 (2010-07-07) entire document | 1-10 |
| A | CN 104252481 A (ALIBABA GROUP HOLDING LIMITED) 31 December 2014 (2014-12-31) entire document | 1-10 |
| A | CN 103890755 A (MITSUBISHI ELECTRIC CORPORATION) 25 June 2014 (2014-06-25) entire document | 1-10 |
| A | US 2007233673 A1 (SEO, H.C. ET AL.) 04 October 2007 (2007-10-04) entire document | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 October 2019** | **28 October 2019** |

| Name and mailing address of the ISA/CN | Authorized officer |
|---|---|
| **China National Intellectual Property Administration No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/099125**

| Patent document cited in search report | | | Publication date (day/month/year) | Patent family member(s) | | | Publication date (day/month/year) |
|---|---|---|---|---|---|---|---|
| CN | 109325032 | A | 12 February 2019 | None | | | |
| CN | 105930453 | A | 07 September 2016 | None | | | |
| CN | 101770291 | A | 07 July 2010 | None | | | |
| CN | 104252481 | A | 31 December 2014 | None | | | |
| CN | 103890755 | A | 25 June 2014 | WO | 2013098886 | A1 | 04 July 2013 |
| | | | | DE | 112011106041 | T5 | 02 October 2014 |
| | | | | JP | WO2013098886 | A1 | 30 April 2015 |
| | | | | US | 2014236994 | A1 | 21 August 2014 |
| US | 2007233673 | A1 | 04 October 2007 | None | | | |

Form PCT/ISA/210 (patent family annex) (January 2015)

**REFERENCES CITED IN THE DESCRIPTION**

**Patent documents cited in the description**

- CN 201811091065